# EUROPÄISCHE PATENTSCHRIFT

(11) **EP 2 185 843 B1**
(45) Veröffentlichungstag und Bekanntmachung des Hinweises auf die Patenterteilung: **15.02.2012**
(21) Anmeldenummer: 08786879.0
(22) Anmeldetag: 05.08.2008
(51) Int. Cl.: F16K 11/074

(54) **MEHRFACHZUGABEVENTIL FÜR EINE ANLAGE ZUM DOSIEREN VON FLÜSSIGEN ODER PASTÖSEN WASCHHILFSMITTELN**
MULTIPLE-ADDITION VALVE FOR A SYSTEM FOR METERING LIQUID OR PASTE-LIKE AUXILIARY WASHING AGENTS
SOUPAPE D'ADDITION MULTIPLE POUR UN DISPOSITIF DE DOSAGE D'AUXILIAIRES DE LAVAGE LIQUIDES OU PÂTEUX

(30) Priorität: 10.08.2007 DE 102007037882
(43) Veröffentlichungstag der Anmeldung: 19.05.2010
(73) Patentinhaber: BSH Bosch und Siemens Hausgeräte GmbH, 81739 München (DE)
(72) Erfinder: HASSE, Torsten, 14641 Nauen (DE); JUNG, Stephan, 38100 Braunschweig (DE); SCHULZE, Ingo, 16341 Panketal (DE)
(86) Internationale Anmeldenummer: PCT/EP2008/060271
(87) Internationale Veröffentlichungsnummer: WO 2009/021874

(56) Entgegenhaltungen:
- DE-A1- 19 736 982
- US-A- 4 310 022
- US-A- 4 674 538
- US-B1- 6 367 504
- US-B1- 6 415 670

## Beschreibung

Die Erfindung betrifft eine automatisch gesteuerte Waschmaschine mit einem Mehrfachzugabeventil für eine Anlage zum maschinellen Dosieren von in Vorratsbehältern vorgehaltenen, flüssigen oder pastösen Waschhilfsmitteln mit einer in einem Gehäuseboden angeordneten, zentralen Flüssigkeitsleitung und mehreren auf einer konzentrisch zur Achse eines Rotors verlaufenden Kreislinie im Gehäuseboden angeordneten Stutzen, die einzeln durch eine Verbindungsleitung innerhalb des motorisch antreibbaren Rotors mit dem Abgang verbindbar sind und die für die Verbindung mit der Verbindungsleitung eine Dichtung aufweisen.

Aus DE 197 36 982 A1 ist ein Mehrfachzugabeventil zum Zugeben von Anwendungsverdünnungen, die aus in Vorratsbehältern vorgehaltenen, flüssigen oder pastösen konzentrierten Waschhilfsmitteln und einer Verdünnungsflüssigkeit, vorzugsweise Wasser, hergestellt worden sind, bekannt. Dieses Mehrfachzugabeventil kommt für die Anwendung in kommerziellen Waschmaschinen in Betracht, um von einer zentralen Abgabeeinrichtung für Waschhilfsmittel aus über die Flüssigkeitsleitung mehrere Maschinen mit bereits vorgemischten Dosen von Anwendungsverdünnungen zu versorgen. Dazu werden die Einzeldosen von bevorrateten Waschhilfsmittel-Konzentraten mit Wasser verdünnt und dann an ein "Mehrfachöffnungsventil" benanntes Mehrfachzugabeventil gegeben. Von dort werden sie als Anwendungsverdünnung über die Stutzen an eine Mehrzahl von Waschmaschinen verteilt.

Das bekannte Mehrfachzugabeventil ist zusätzlich zu seinem unterschiedlichen Einsatzgebiet auch kompliziert und aufwändig gebaut. Insbesondere ist ein teurer Mechanismus vorhanden, durch den die im Gehäuseboden angeordneten Stutzen immer dann von der im Rotor angeordneten Verbindungsleitung hydraulisch getrennt werden, bevor der Rotor in eine neue Position gedreht werden soll. Dazu hebt sich ein kegelförmiges Teil der Verbindungsleitung aus einem Trichter des Stutzens und entlastet gleichzeitig die umlaufende Ringdichtung. Nach Einfahren in die neue Position muss der Rotor wieder gesenkt werden, damit sich das kegelförmige Teil in den Trichter des anderen Stutzens senkt und diese Dichtung belastet. Zum Heben und Senken des Rotors wird ein Druckluftzylinder benutzt, der an der Triebwelle des Rotors angreift.

Dichtung belastet. Zum Heben und Senken des Rotors wird ein Druckluftzylinder benutzt, der an der Triebwelle des Rotors angreift.

Die US 4 674 538 beschreibt ein Mehrwegeventil für eine Abwasseraufbereitungsanlage. Das Ventil umfasst einen Rotor mit zwei bogenförmigen Kammern, welcher drehbar in einem Gehäuse aufgenommen ist. Je nach Drehposition des Rotors können mehrere Leitungen des Gehäusebodens jeweils paarweise über die Kammern des Rotors verbunden werden. Mittels einer Rückstellfeder wird dabei eine axiale Anpresskraft auf den Rotor ausgeübt.

Der Erfindung liegt die Aufgabe zugrunde, ein Mehrfachzugabeventil der eingangs beschriebenen Art für Waschmaschinen gebrauchsfähig zu machen, die im Haushalt zur Anwendung kommen und bei denen je ein Konzentrat von Waschhilfsmitteln aus mehreren Vorratsbehältern in eine Mischkammer geführt werden soll, von wo aus es mit (vorzugsweise) Wasser verdünnt und vermischt und anschließend in den Wäschebehandlungsraum dieser einen Waschmaschine geführt werden sollen. Eine weitere und wesentliche Aufgabe der Erfindung ist auch, dass ein solches Mehrfachzugabeventil wegen seiner Verwendung in einem Produkt der Konsumgüterindustrie außerordentlich kostengünstig aufgebaut dennoch aber über eine Lebensdauer von mindestens 10 Jahren bei normaler Belastung stabil und sicher funktionieren muss.

Erfingdungsgemäß wird diese Aufgabe durch das Kennzeichen des Anspruches 1 dadurch gelöst, dass das Mehrfachzugabeventil in der Weise zum Zugeben von ausgewählten flüssigen oder pastösen Waschhilfsmitteln dient, dass jeder der Stutzen an einen der Vorratsbehälter angeschlossen und die Flüssigkeitsleitung über eine Pumpe mit einer Zugabeeinrichtung für einen Wäschebehandlungsraum verbindbar ist, und dass der Rotor durch eine dauerhaft axial auf ihn in Richtung des Gehäusebodens wirkende Kraft die Dichtungen presst, bis die Kontaktflächen des Rotors und des Gehäusebodens im Wesentlichen eine gemeinsame Ebene bilden. Hierdurch kann einerseits auf eine aufwändige Einrichtung zum Lösen der Stutzen- und Verbindungsleitungsübergänge verzichtet werden. Andererseits ist das Mehrfachzugabeventil durch die beschriebene Anordnung zu Auswahl eines von mehreren Waschhilfsmitteln für eine Waschmaschine geeignet. Die gemeinsame Ebene des Rotors und des Gehäusebodens vermindern ihren Abstand auf nahezu Null und bilden dadurch bereits eine gute Abdichtung zwischen den einzelnen Stutzenübergängen. Da eine dauerhaft auf den Rotor wirkende Kraft, z. B. eine Federkraft, aber auch Grenzen hat, sind noch Dichtungen vorgesehen, welche die Übergänge umfassen.

Eine Anlage zum maschinellen Dosieren von mehreren unterschiedlichen Waschhilfsmitteln wird regelmäßig gereinigt werden müssen. Dazu sind Systeme bekannt, welche die Leitungen der Anlage nach oder vor jedem Dosiervorgang spülen (DE 10 2007 032 759.7 des vorliegenden Patentanmelders). Um diese

Verbindungsleitung aufweist. Im Falle seiner Ansteuerung kann der Stutzen nämlich Spülwasser in das Zugabesystem leiten, um unliebsame Vermischungen zwischen dem nachdosierten Waschhilfsmittel und dem Rest des zuvor dosierten Waschhilfsmittels zu vermeiden. Durch die fehlende Dichtung kann nun beim Spülen Wasser auch zwischen die beiden Flächen des Rotors und des Gehäusebodens gelangen und dort etwa abgelagerte Reste von Waschhilfsmitteln verdünnen und abspülen.

Die Kraft zwischen dem Rotor und dem Gehäuseboden kann durch eine zentral angeordnete Druckfeder zwischen einem Gehäusedeckel des Mehrfachzugabeventils und der oberen Rotorfläche dargestellt sein. Dadurch würde diese Kraft durch die Bemessung der Druckfeder eingestellt werden können. Sofern gemäß einer weiteren Ausbildung der Erfindung die Kraft durch eine passgenaue Positionierung des Rotors im Gehäuseboden dargestellt ist, kann diese Positionierung eine feste Einstellung der Kraft dadurch bewirken, dass die Positionierung justierbar ist. Beispielsweise kann der Gehäusedeckel mittels eines Gewindes in seiner Höhenposition justierbar und in dieser Position verrastbar sein.

Die Dichtungen bestehen beispielsweise aus einem hochflexiblen Material mit geringer Shore-Härte von ca. 30 bis ca. 40 Shore-Härte-Einheiten, damit geringe Toleranzen in der Höhenposition durch die Flexibilität der Dichtungen ausgeglichen werden können.

Anhand eines in der Zeichnung dargestellten Ausführungsbeispiels ist die Erfindung nachstehend näher erläutert. Es zeigen
- Fig. 1: eine schematische Darstellung einer Anlage zum maschinellen Dosieren von in Vorratsbehältern vorgehaltenen flüssigen Waschhilfsmitteln in einer Waschmaschine,
- Fig. 2: ein erfindungsgemäß gestaltetes Mehrfachzugabeventil im senkrechten Schnitt entlang der Schnittlinie II-II in Fig. 4,
- Fig. 3: eine vergrößerte Detailansicht des Schnitts gemäß Einzelheit III in Fig. 2 für eine Variante mit Spülung der Kontaktflächen und
- Fig. 4: eine Ansicht auf die Unterseite des Gehäusebodens mit den auf einer Kreisbahn und dem zentral angeordneten Stutzen.

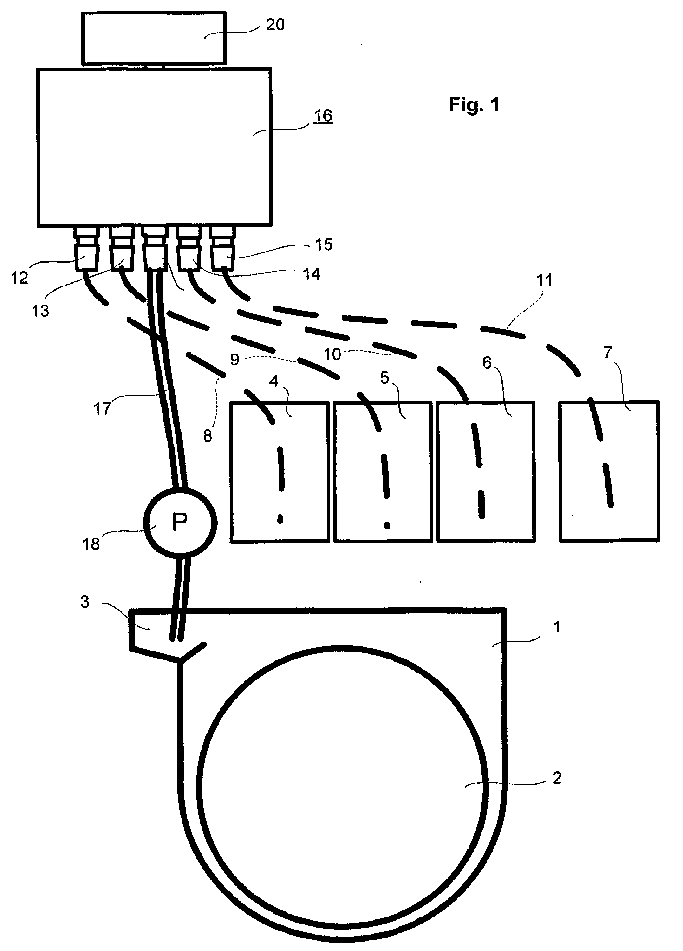

Die in Fig. 1 dargestellte Anlage zum maschinellen Dosieren ist hier gegenüber der Waschmaschine, von der nur der Laugenbehälter 1 und die darin drehbar gelagerte Wäschetrommel 2 sowie eine Einrichtung 3 zum Zugeben von Waschhilfsmitteln schematisch dargestellt sind, stark vergrößert gezeigt, damit ihr Aufbau deutlich zu erkennen ist. Diese Einrichtung 3 dient im Allgemeinen dazu, von Hand dosierte pulverförmige oder flüssige Waschhilfsmittel-Portionen zur Ausspülung durch Frischwasser aus einer nicht dargestellten Frischwasserleitung bereit zu legen. In dieser Dosier-Anlage sind Vorratsbehälter 4 bis 6 angeordnet, die zur Bevorratung von größeren Mengen von unterschiedlichen Waschhilfsmitteln dienen. Ein weiterer Vorratsbehälter 7 dient in diesem Beispiel dazu, eine genügend große Menge an frischen Wasser zu bevorraten, mit dem die Leitungen, die mit konzentrierten Waschhilfsmitteln benetzt werden, in einer Phase freigespült werden können, in der gerade kein Waschhilfsmittel beigegeben wird.

Jeder Vorratsbehälter 4 bis 7 ist über eine eigene Saugleitung 8 bis 11 mit je einem Stutzen 12 bis 15 eines Mehrfachzugabeventils 16 verbunden, das die Dosis aus jeweils einem der Vorratsbehälter 4 bis 7 über eine Flüssigkeitsleitung 17, eine Pumpe 18 und der Waschmitteleinspüleinrichtung 3 dem Laugenbehälter 1 zuführt. Im Mehrfachzugabeventil 16 existiert - wie weiter unten noch erläutert werden wird - eine schaltbare Verbindungsleitung, durch die wahlweise einer der Stutzen 12 bis 15 mit dem zentralen Stutzen 19 der Flüssigkeitsleitung 17 verbunden werden kann. Dazu dient ein auf der Oberseite des Mehrfachzugabeventils 16 montierter Getriebemotor 20 mit einer an sich bekannten Einrichtung zur Positionsbestimmung. Eine nicht dargestellte Steuereinrichtung hat Informationen, die den Getriebemotor entsprechend dem gewünschten Waschhilfsmittel ansteuern. Dann ist die jeweilige Saugleitung, z. B. 8 des Behälters 4, mit dem Stutzen 19 der Flüssigkeitsleitung 17 verbunden, um mittels der Pumpe 18 während einer ebenfalls von der Steuereinrichtung bemessenen Zeitdauer eine entsprechende Dosis des betreffenden Waschhilfsmittels abzusaugen und in den Laugenbehälter 1 zu fördern.

Nach jeder Förderung eines Waschhilfsmittels kann der gesamte Leitungsstrang von der Verbindungsleitung über den zentralen Stutzen 19, die Flüssigkeitsleitung 17 bis zur Pumpe 18 mit klarem Wasser nachgespült werden. Im dargestellten Beispiel ist das Wasser dazu im Behälter 7 bevorratet und wird zum Zwecke der Spülung über die Saugleitung 11, die Verbindungsleitung des Mehrfachzugabeventils 16 und den zentralen Stutzen 19 zur Pumpe 18 gesaugt. Während dieser Wasserförderung werden alle beteiligten Leitungsführungen gespült und die Verdünnungen zum Laugenbehälter 1 gefördert. Da der Steuereinrichtung bekannt ist, welche der bevorrateten Waschhilfsmittel sich gegenseitig nicht vertragen, muss nicht nach jeder Dosierung irgendeines Waschhilfsmittels gespült werden. Es genügen Spülungen nach der Dosierung eines Waschhilfsmittels, das sich mit demjenigen der folgenden Dosierung nicht verträgt, sei es, dass die Wirkung des nachdosierten Hilfsmittels beeinträchtigt wird oder beide Hilfsmittel miteinander reagieren und das Reaktionsprodukt in irgend einer Weise schädlich ist. Jedenfalls erhöhen solche Spülungen die Lebensdauer eines erfindungsgemäßen Mehrfachzugabeventils 16.

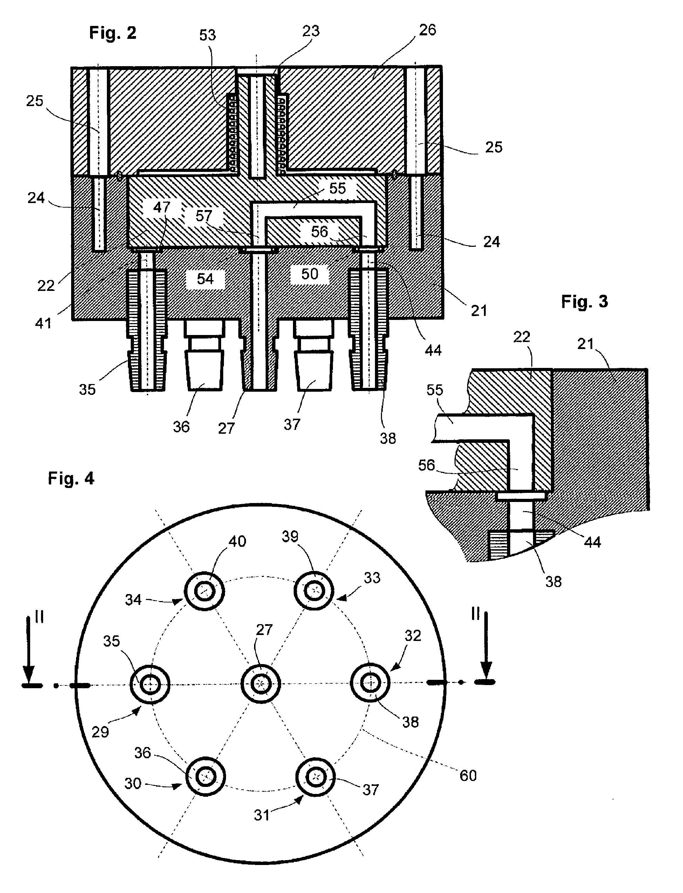

Aus Fig. 2 bis 4 ist ein Beispiel für ein Mehrfachzugabeventil 16 ersichtlich. Es besteht im Wesentlichen aus einem Gehäuseboden 21 mit einer gut passenden Höhle für den Rotor 22, der an seiner Oberseite einen Antriebsschaft 23 hat. Mit diesem Schaft 23 ist der Motor 20 gekoppelt. Bohrungen 24 im Gehäuseboden 21 und 25 im Gehäusedeckel 26, die den Schaft 23 lagert, dienen zur Schraubenbefestigung untereinander.

Im Gehäuseboden 21 sind ein zentraler Stutzen 27 und sechs auf einem konzentrischen Kreis 28 angeordnete Stutzen 29 bis 34 angebracht. Während der zentrale Stutzen 27 einteiliger Bestandteil des Gehäusebodens 21 ist, bestehen die Stutzen 29 bis 34 aus je einem Einsatz 35 bis 40, die in gleichem Abstand zum zentralen Stutzen 27 und zum jeweils benachbarten Stutzen verteilt sind. Sie sind so ausgebildet, dass die Leitungen 8 bis 11 und 17 aus Schläuchen bestehen und leicht aufgeschoben werden können, ohne dass sie sich von selbst wieder lösen.

Die Mündungen der Stutzen 27 bzw. der den Einsätzen 35 bis 40 zugeordneten Kanäle 41 bis 46 sind mit Dichtringsitzen versehen, in die Dichtungen 47 bis 52 eingelegt sind. Diese Dichtungen bestehen aus einem hochelastischen Material mit geringer Shore-Härte von ca. 30 bis ca. 40 Shore-Härte-Einheiten und sind so dimensioniert, dass sie in entlasteten Zustand aus dem Dichtringsitz heraus ragen. Erst nach dem Einsatz des Rotors 22 drückt dessen Unterseite - unterstützt durch eine zentrale Druckfeder 53 - die Dichtungsringe 47 bis 52 so stark zusammen, dass sich die planen Flächen der Unterseite des Rotors 22 und der Oberseite der Rotorhöhle im Gehäuseboden 21 so aneinander schmiegen, so dass ihre Flächen einen definierten Minimalabstand einhalten. Entsprechend ergeht es dem Dichtungsring 54 des zentralen Stutzens 27. Zur Flüssigkeitsverbindung je eines Stutzens 29 bis 34 mit dem zentralen Stutzen 27 in der jeweiligen Drehposition des Rotors 22 dient eine fest im Rotor 22 eingegossene Verbindungsleitung 55. Ihre Mündung 56 hat entsprechend der Drehposition des Rotors 22 jeweils Verbindung mit einer der Mündungen 41 bis 46 der auf dem Kreis verteilt angeordneten Stutzen 29 bis 34 und ihre Mündung 57 stets mit dem zentralen Stutzen 27. In der dargestellten Drehposition verbindet die Verbindungsleitung 55 den zentralen Stutzen 27 mit dem äußeren Stutzen 32 (Einsatz 38), so dass die Pumpe 18 im Betrieb beispielsweise eine Dosis Spülwasser aus dem Vorratsbehälter 7 zieht.

Bei der in Fig. 3 dargestellten Variante fehlt der Dichtungsring 50 im Kanal 44 des Stutzens 32, in den der Einsatz 38 gezogen ist. Dieser Stutzen ist an die Saugleitung 11 angeschlossen, die dem Ansaugen von Spülwasser aus dem Behälter 7 dient. Führt daher der Kanal 44 Spülwasser, dann kann die fehlende Dichtung dafür sorgen, dass eventuelle Benetzungen der Kontaktflächen zwischen Gehäuseboden 21 und Rotor 22 durch Waschhilfsmittel freigespült werden und nicht zu Reaktionen mit anderen Waschhilfsmitteln führen. Ein solches Freispülen kann insbesondere dadurch begünstigt sein, dass anstelle des hier dargestellten Saugprinzips ein Druckprinzip angewendet wird, bei dem in der Saugleitung 11 und dann auch im Kanal 44 Druck steht, der ein Eindringen der Spülflüssigkeit zwischen die Kontaktflächen fördert.

Die Erfindung ist nicht auf das dargestellte Ausführungsbeispiel beschränkt. Die Saugstutzen 29 bis 34 können auch an einer Kegelfläche oder an der Mantelfläche des Gehäusebodens 21 verteilt angeordnet sein. Entsprechend müsste der Rotor 22 angepasst sein. Auch können mehr oder weniger Stutzen auf der Kreislinie verteilt und muss die Verteilung nicht gleichmäßig sein; denn ein Getriebemotor 20 könnte dem Rotor 22 auch - in gewissen Grenzen - jede beliebige Stellung vermitteln. Anstelle des Getriebemotors kann auch jede beliebige andere Art eines kreisförmige Bewegungen erzeugenden Antriebsmittels dienen. Auch die Form der Dichtungen ist nicht festgelegt, ebenso wenig wie die Art und Form der Feder (53), die den Rotor 22 gegen den Gehäuseboden 21 drückt. Beispielsweise könnten auch aus Kunststoff geformte, miteinander im Eingriff stehende Rastelemente des Gehäusedeckels 26 oder des Gehäusebodens 21 mit solchen des Rotors 22 eine vergleichbare Federwirkung vermitteln. Eine Verschraubung des Gehäusedeckels 26 mit dem Gehäuseboden 21 könnte außerdem eine Justage der Anpresskraft gestatten. Zur Spülung der Leitungswege muss auch nicht unbedingt Wasser im Vorrat gehalten werden, wenn sichergestellt werden kann, dass zum Zeitpunkt des Spülbedarfs Frischwasser aus dem Leitungsnetz oder vergleichsweise stark verdünnte Lauge aus dem Laugenbehälter 1 zur Verfügung steht. Dann muss lediglich die Leitung 11 mit der entsprechenden Quelle verbunden sein.

## Patentansprüche

1. Automatisch gesteuerte Waschmaschine mit einer Anlage zum maschinellen Dosieren von in Vorratsbehältern (4, 5, 6) vorgehaltenen, flüssigen oder pastösen Waschhilfsmitteln, welche Anlage ein Mehrfachzugabeventil (16) umfasst, welches Mehrfachzugabeventil (16) eine in einem Gehäuseboden (21) angeordnete, zentrale Flüssigkeitsleitung (17) und mehrere auf einer konzentrisch zur Achse eines Rotors verlaufenden Kreislinie (60) im Gehäuseboden (21) angeordnete Stutzen (29 bis 34) aufweist, die einzeln durch eine Verbindungsleitung (55) innerhalb des motorisch antreibbaren Rotors (22) mit dem Abgang (zentrale Leitung 27) verbindbar sind und die für die Verbindung mit der Verbindungsleitung (55) eine Dichtung (47, 50, 54) aufweisen, **dadurch gekennzeichnet, dass** das Mehrfachzugabeventil (16) in der Weise zum Zugeben von ausgewählten flüssigen oder pastösen Waschhilfsmitteln dient, dass jeder der Stutzen (29 bis 33 oder 34) an einen der Vorratsbehälter (4 bis 7) angeschlossen und die Flüssigkeitsleitung (17) über eine Pumpe (18) mit einer Zugabeeinrichtung (3) für einen Wäschebehandlungsraum (1) verbindbar ist, und dass der Rotor (22) durch eine dauerhaft axial auf ihn in Richtung des Gehäusebodens (21) wirkende Kraft die Dichtungen (47, 50, 54) presst, bis die Kontaktflächen des Rotors (22) und des Gehäusebodens (21) einen definierten Minimalabstand zueinander einhalten.

2. Waschmaschine nach Anspruch 1, **dadurch gekennzeichnet, dass** einer der Stutzen (15) für die Zuführung von Spülflüssigkeit, vorzugsweise Wasser, vorgesehen ist und keine Dichtung zur Verbindungsleitung (55) aufweist.

3. Waschmaschine nach Anspruch 1, **dadurch gekennzeichnet, dass** die Kraft durch eine zentral angeordnete Druckfeder (53) zwischen einem Gehäusedeckel (26) des Mehrfachzugabeventils (16) und der oberen Fläche des Rotors (22) dargestellt ist.

4. Waschmaschine nach Anspruch 1, **dadurch gekennzeichnet, dass** die Kraft durch eine passgenaue Positionierung des Rotors (22) im Gehäuseboden (21) dargestellt ist.

5. Waschmaschine nach Anspruch 1, **dadurch gekennzeichnet, dass** die Kraft durch eine passgenaue Verschraubung eines Gehäusedeckels (26) am Gehäuseboden (21) mit definiertem Abstand zwischen dem Gehäusedeckel (26) und dem Gehäuseboden (21) dargestellt ist.

6. Waschmaschine nach Anspruch 1 oder einem der Ansprüche 3 bis 5, **dadurch gekennzeichnet, dass** die Dichtungen (47 bis 52) aus einem hochflexiblen Material mit geringer Shore-Härte von ca. 30 bis ca. 40 Shore-Härte-Einheiten besteht.

## Claims

1. Automatically controlled washing machine with an installation for mechanical metering of liquid or pasty washing additives stored in storage containers (4, 5, 6), which installation comprises a multiple feed valve (16) comprising a central liquid duct (17) arranged in a housing base (21) and a plurality of stub pipes (29 to 34), which are arranged in the housing base (21) on a circular line (60) extending concentrically with the axis of a rotor and which are individually connectible by a connecting duct (55) within the motor-drivable rotor (22) with the outlet (central duct 27) and have a seal (47, 50, 54) for the connection with the connecting duct (55), **characterised in that** the multiple feed valve (16) serves for feeding selected liquid or pasty washing additives in such a manner that each of the stub pipes (29 to 33 or 34) is connected with one of the storage containers (4 to 7) and the liquid duct (17) is connectible by way of a pump (18) with a feed device (3) for a laundry treatment chamber (1), and that the rotor (22) presses the seals (47, 50, 54) by a force, which permanently acts axially thereon in the direction of the housing base (21), until the contact surfaces of the rotor (22) and the housing base (21) have a defined minimum spacing from one another.

2. Washing machine according to claim 1, **characterised in that** one of the stub pipes (15) is provided for the feed of rinsing liquid, preferably water, and has no seal for the connecting duct (55).

3. Washing machine according to claim 1, **characterised in that** the force is represented by a centrally arranged compression spring (53) between a housing cover (26) of the multiple feed valve (16) and the upper surface of the rotor (22).

4. Washing machine according to claim 1, **characterised in that** the force is represented by a precisely fitting positioning of the rotor (22) in the housing base (21).

5. Washing machine according to claim 1, **characterised in that** the force is represented by a precisely fitting screw-connection of a housing cover (26) with the housing base (21) with a defined spacing between the housing cover (26) and the housing base (21).

6. Washing machine according to claim 1 or any one of claims 3 to 5, **characterised in that** the seals (47 to 52) consist of a highly flexible material with a low Shore hardness of approximately 30 to 40 Shore hardness units.

## Revendications

1. Lave-linge à commande automatique comprenant une installation pour le dosage mécanique de produits auxiliaires de lavage liquides ou pâteux, maintenus dans des réservoirs (4, 5, 6), laquelle installation comprend une soupape d'addition multiple (16), laquelle soupape d'addition multiple (16) présente une conduite de liquide (17) centrale disposée dans un fond de boîtier (21) et plusieurs tubulures (29 à 34) disposées dans le fond de boîtier (21) sur une circonférence (60) s'étendant de manière concentrique par rapport à l'axe d'un rotor, lesquelles sont raccordables individuellement à la sortie (conduite centrale 27) au moyen d'une conduite de raccordement (55) située à l'intérieur du rotor (22) entraînable par moteur et présentent un joint d'étanchéité (47, 50, 54) pour la liaison avec la conduite de raccordement (55), **caractérisé en ce que** la soupape d'addition multiple (16) sert à l'adjonction de moyens auxiliaires de lavage sélectionnés, liquides ou pâteux, de manière à ce que chacune des tubulures (29 à 33 ou 34) soit raccordée à l'un des réservoirs (4 à 7) et **en ce que** la conduite de liquide (17) soit raccordable par l'intermédiaire d'une pompe (18) à un dispositif d'adjonction (3) pour une chambre de traitement de linge (1), et **en ce que** le rotor (22) presse les joints d'étanchéité (47, 50, 54) au moyen d'une force agissant axialement de manière continue sur lui en direction du fond de boîtier (21), jusqu'à ce que les surfaces de contact du rotor (22) et du fond de boîtier (21) gardent l'une par rapport à l'autre un écart minimal défini.

2. Lave-linge selon la revendication 1, **caractérisé en ce que** l'une des tubulures (15) est ménagée pour l'amenée de liquide de lavage, de préférence de l'eau, et **en ce qu'**il ne présente aucun joint d'étanchéité pour la conduite de raccordement (55).

3. Lave-linge selon la revendication 1, **caractérisé en ce que** la force est représentée par un ressort de compression (53) disposé centralement entre un couvercle de boîtier (26) de la soupape d'addition multiple (16) et la surface supérieure du rotor (22).

4. Lave-linge selon la revendication 1, **caractérisé en ce que** la force est représentée par un positionnement, ajusté avec précision, du rotor (22) dans le fond de boîtier (21).

5. Lave-linge selon la revendication 1, **caractérisé en ce que** la force est représentée par un raccord à vis, ajusté avec précision, d'un couvercle de boîtier (26) sur le fond de boîtier (21) avec écart défini entre le couvercle de boîtier (26) et le fond de boîtier (21).

6. Lave-linge selon la revendication 1 ou l'une quelconque des revendications 3 à 5, **caractérisé en ce que** les joints d'étanchéité (47 à 52) sont constitués d'un matériau hautement flexible ayant une dureté shore moindre d'env. 30 à 40 unités de dureté shore.
